Europäisches Patentamt

European Patent Office

Office européen des brevets

(19)

(11) **EP 0 767 452 A1**

(12) **EUROPEAN PATENT APPLICATION**

(43) Date of publication:
**09.04.1997 Bulletin 1997/15**

(51) Int Cl.6: **G11B 5/55**, G11B 5/584

(21) Application number: **96307100.6**

(22) Date of filing: **27.09.1996**

(84) Designated Contracting States:
**DE FR GB IT NL**

(30) Priority: **02.10.1995 US 4726**
**19.04.1996 US 636744**

(71) Applicant: **AIWA CO., LTD.**
**Taito-ku, Tokyo 110 (JP)**

(72) Inventor: **Millerd, Andrew B., Jr,**
**c/o Aiwa Digital Tech, Inc**
**Santa Ana, California 92705-5723 (US)**

(74) Representative: **Prutton, Roger**
**MARKS & CLERK,**
**Alpha Tower,**
**Suffolk Street Queensway**
**Birmingham B1 1TT (GB)**

(54) **A method for seeking the centre of a reference burst**

(57) A method for digitally detecting the center of a reference burst, to enable accurate positioning of a transversely movable magnetic tape head assembly at any of a plurality of track locations across a width of magnetic media. From an initial predetermined location above all possible reference bursts, the tape head assembly is stepped down towards the bottom edge of the tape in successive predetermined increments until the forward reference burst signal is detected. A digital detector is preferably utilized to determine the presence or non presence of the reference burst signal. The number of steps required to initially detect the forward reference burst signal is then recorded. The tape head assembly is stepped back up above the detected forward reference burst signal to its initial location and then stepped back down towards the centerline and bottom edge of tape in successive increments until the entire forward reference burst signal is traversed. To determine the center of the detected reference burst, the step locations that are over detected forward reference burst signals are summed and the average location is calculated. The center of the detected reverse reference burst signal may be detected similarly except that the tape head assembly does not have to be stepped back up towards the top edge of the tape after initial detection of the reverse reference burst signal.

FIG. 1

## Description

### REFERENCE TO RELATED APPLICATION

This is a continuation of U.S. Provisional Application No. 60/004,726, filed October 2, 1995.

### BACKGROUND OF THE INVENTION

#### Field of the Invention

The present invention relates to a track following positioning method, and more particularly to a method for controlling the position of a magnetic head relative to a magnetic media, such as a magnetic tape.

#### Description of the Prior Art

Digital data is conventionally stored on magnetic media in the form of flux transitions on the surface of the media. Data recovery consists of determining the presence, and relative timing, of such flux transitions. Optimal operation of a recording device therefore depends upon the proper orientation and position of the magnetic head. Otherwise, the use of an improperly oriented and positioned recording head may result in the information being recorded in a manner that cannot be accurately retrieved on playback. Similarly, an improperly oriented or positioned playback head may result in the inaccurate retrieval of information even if the information was properly recorded. In either case, the integrity of the information storage system may be compromised and information may be lost.

Typically, prior to writing data on one of the forward and reverse tracks, a reference pattern, commonly referred to as a reference burst, is written and read. The reference burst is usually an alternating current signal of fixed frequency and predetermined amplitude used for gain control of a read amplifier in the tape transport and positioning of the heads on the tape tracks. After reading the respective reference bursts, the forward and reverse read heads generate an output signal which is applied to a read amplifier in a peak hold circuit. The peak hold circuit determines the peak value of either of the reference bursts. The peak value is then digitized and applied to a tape transport controller which compares the peak value to a predetermined value stored therein. The gain of the read amplifier is accordingly adjusted by the controller such that it approximately equals the peak of the amplified reference burst to the predetermined value. The controller additionally utilizes the digital samples of the reference burst signal level for controlling the initial transverse position of the tape head on the tape.

Optimal gain control of the read amplifier and positioning of the heads on the tape tracks thus depends upon numerous factors, including accurate recovery of the reference bursts. In particular, it is desirable to seek the center of a reference burst. Conventional methods for seeking the center of a reference burst include stepping the head assembly about the reference burst and performing a series of analog to digital conversions. Prior art methods, however, are either ineffective and/or expensive.

What is needed therefore is a simple and effective method for recovery of reference bursts and in particular, locating the center of such reference bursts.

### SUMMARY OF THE INVENTION

The preceding and other shortcomings of prior art methods and systems are overcome by the present invention which provides a method for digitally detecting the center of a reference burst, to enable accurate positioning of a transversely movable magnetic read/write head assembly at any of a plurality of track locations across a width of magnetic media. In particular, after forward and reverse reference burst signals have been written, the read/write head assembly is initially positioned at a predetermined location such that the head assembly is above all possible reference bursts. The read/write head assembly is then stepped down towards the centerline and bottom edge of the tape in successive predetermined increments until the forward reference burst signal is detected. A digital detector is preferably utilized to determine the presence or non presence of the reference burst signal. The number of steps required to initially detect the forward reference burst signal is then recorded. Once the forward reference burst signal has been initially detected, the read/write head assembly is stepped back up above the detected forward reference burst signal towards the top edge of tape to its initial location. The read/write head assembly is then stepped back down towards the centerline and bottom edge of tape in successive increments until the entire forward reference burst signal is traversed. The number of increments or steps which were required to traverse the detected forward reference burst signal can thus be determined utilizing the detector. To determine the center of the detected reference burst, the step locations that are over detected signals of the forward reference burst are summed and the average location (or center) is calculated.

The read/write head assembly can then be stepped down such that it is positioned at a predetermined location above the reverse reference burst signal. The center of the detected reverse reference burst signal may be determined in the same way except that the read/write head assembly does not have to be stepped back up towards the top edge of the tape after initial detection of the reverse reference burst signal.

The foregoing and additional features and advantages of this invention will become apparent from the detailed description and accompanying drawing figures that follow. In the figures and written description, numerals indicate the various features of the invention, like numerals referring to like features throughout for both the drawing figures and the written description.

BRIEF DESCRIPTION OF THE DRAWINGS

FIG. 1 is a diagram of a read/write head surface contacting a typical physical track layout of magnetic media; and
FIG. 2 is a flow chart of an algorithm for digitally detecting the center of a reference burst.

DETAILED DESCRIPTION OF THE PREFERRED EMBODIMENT(S)

The present invention provides a method for digitally detecting the center of a reference burst, to enable accurate positioning of a transversely movable magnetic read/write head assembly at any of a plurality of track locations across a width of magnetic media. The magnetic media may be a magnetic tape, diskette or other magnetic media. The present invention may typically be utilized for locating the center of reference bursts on standard 6.35 mm or 8.00 mm width magnetic tapes. For illustrative purposes, the present invention will be described utilizing standard magnetic tape.

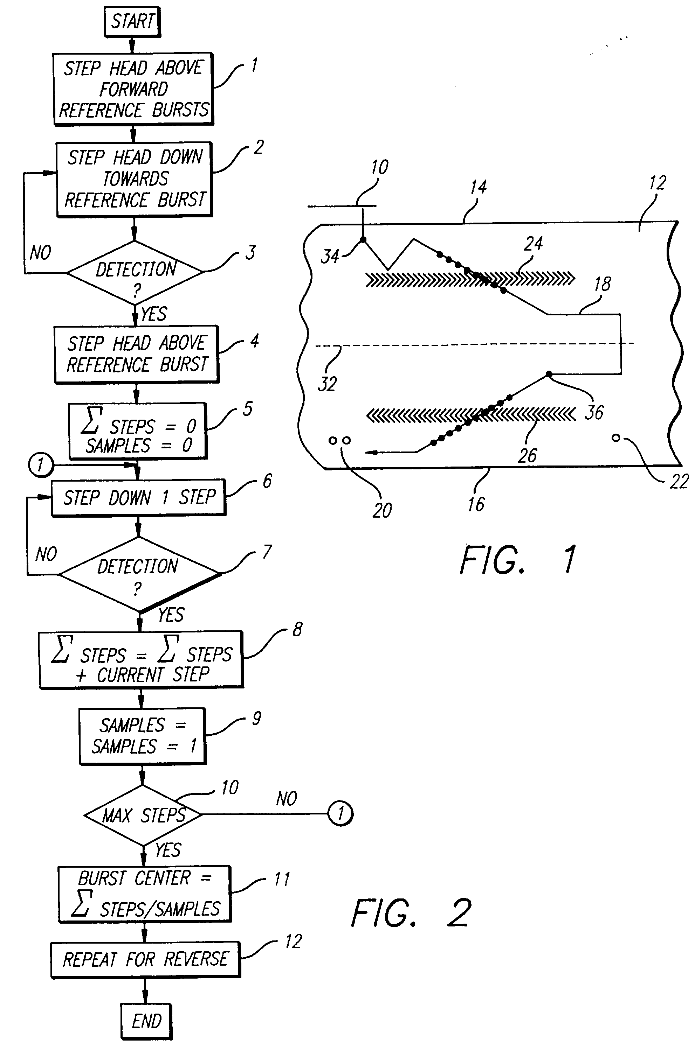

Referring to FIG. 1, a diagram of a read/write head assembly 10 contacting a typical physical track layout of 6.35 mm or 8.00 mm width magnetic tape 10 is illustrated. The read/write head assembly 10 preferably includes one or more read and write heads 28 and 30. As is well known to those skilled in the art, a typical physical track layout of magnetic tape 12 includes data tracks written in parallel in the forward and reverse directions. The read/write head assembly 10 is transversely movable across the width of the multitrack tape 12 as illustrated by the directional arrow 18. As is well known by those skilled in the art, the read/write head assembly 10 may be moved by a conventional bidirectional stepper motor (not shown) coupled to the head assembly 10 by a lead screw (not shown) or other conventional means and controlled by a controlled means, such as a microprocessor (not shown).

As illustrated in FIG. 1, the tape 12 includes a top edge 14 and bottom edge 16 of tape 12. In accordance with conventional magnetic tape format standards, a plurality of beginning of tape (BOT) holes 20 are longitudinally located adjacent the physical beginning of the tape 12. More particularly, as illustrated in FIG. 1, a pattern of double holes 20 indicative of the BOT are disposed at the beginning of tape 12. Located a predetermined distance from the BOT holes 20 is a single hole 22 indicative of the load point (LP), i.e., the point at which normal recording operations begin. A conventionally formatted magnetic tape 12 also includes a series of end of tape (EOT) holes (not shown) longitudinally located adjacent the physical end of tape 12, as well as other tape markers (not shown).

Prior to writing data on the forward and reverse tracks, forward and reverse reference burst signals 24 and 26 are written utilizing the write head 30, preferably in the load zone area, i.e. the region between the BOT holes 20 and the LP holes 22. The forward and reverse reference burst signals 24 and 26 are typically an alternating current signal of fixed frequency and predetermined amplitude used for positioning the head assembly 10 on the magnetic tape 12 and gain control of the read amplifier (not shown) in the tape transport (not shown). As illustrated in FIG. 1, the forward reference burst signal 24 is located between the centerline 32 and the top edge 14 of the tape 12 and the reverse reference burst signal 26 is located between the centerline 32 and the bottom edge 16 of the tape 12.

In accordance with the present invention, either the forward or the reverse reference burst signal 24 or 26 may be located first. For illustrative purposes, however, the present invention will initially detect and determine the center of the forward reference burst signal 24.

Referring to FIG. 1, after the forward and reverse reference burst signals 24 and 26 have been written, the read/write head assembly 10 is initially positioned at a predetermined location such that the head assembly 10 is above all possible reference bursts. For illustration, the initial location of read/write head assembly 10 is shown as location 34 in FIG. 1. The read/write head assembly 10 may be initially located at other locations above the forward and reverse reference bursts 24 and 26 as well. The read/write head assembly 10 is then stepped down towards the centerline 32 and bottom edge 16 of the tape 12 in successive predetermined increments until the forward reference burst signal 24 is detected. A digital detector (not shown) is preferably utilized to determine the presence or non presence of the reference burst signal. Alternatively, a conventional analog detector may be used. The number of steps required to initially detect the forward reference burst signal 24 is then recorded. The size of the predetermined steps is determined in accordance with a number of factors, including but not limited to the particular magnetic tape used.

Once the forward reference burst signal 24 has been initially detected, the read/write head assembly 10 is stepped back up above the detected forward reference burst signal 24 towards the top edge 14 of tape 12 to initial location 34. The read/write head assembly 10 is then stepped back down towards the centerline 32 and bottom edge 16 of tape 12 in successive increments until the entire forward reference burst signal 24 is traversed. The number of increments or steps which were required to traverse the detected forward reference burst signal 24 can thus be determined utilizing the detector.

To determine the center of the detected reference burst, the step locations that are over detected forward reference burst signals 24 are summed and the average location (or center) is calculated.

As shown in FIG. 1, the read/write head assembly 10 can then be stepped down such that it is positioned at location 36 above the reverse reference burst signal 26. The center of the detected reverse reference burst signal 26 may be determined in the same way except that the read/write head assembly 10 does not have to be stepped back up towards the top edge 14 of the tape 12 after initial detection of the reverse reference burst signal 26.

FIG. 2 is a flow chart of an algorithm 40 for digitally detecting the center of the forward and reverse reference burst signals 24 and 26 illustrated in FIG. 1. In step 1, the read/write head assembly 10 is stepped to an initial position 34 above the forward reference burst signal 24. The read/write head assembly 10 is then stepped down towards the forward reference burst signal 24 (step 2) until the forward reference burst signal 24 is initially detected (step 3). Upon initial detection, the read/write head assembly 10 is stepped back above the detected forward reference burst signal 24 to initial location 34 (step 4).

Prior to detection of the forward reference burst signal 24, the sum of steps and samples are both initialized to zero (step 5). The read/write head assembly 10 is then stepped down 1 step (step 6). Upon detection (step 7), the sum of steps (step 8) is calculated according to the following equation:

$$\Sigma steps = \Sigma steps + current\ step \qquad (1)$$

In step 9, the number of samples is calculated according to the following equation:

$$Samples = samples + 1 \qquad (2)$$

If there is no detection in step 7, the read/write head assembly 10 steps down 1 step again (step 6) until detection occurs (step 7). After the read/write head assembly 10 has traversed a maximum number of steps (step 10), the center of the forward reference burst signal 24 is calculated in step 10 according to the following equation (step 11):

$$Burst\ center = \Sigma\ steps\ /\ samples \qquad (3)$$

To determine the center of the detected reference burst, the step locations that are over detected forward reference burst signals are summed and the average location is calculated. If in step 10, the maximum number of steps is not traversed, steps 6 through 10 are repeated.

To find the center of the detected reverse reference burst signal 26 (step 12), steps 4-11 are repeated. As previously stated, the center of the detected reverse reference burst signal 26 may be determined in the same way as the forward reference burst signal 24 except that the read/write head assembly 10 does not have to be stepped back up towards the top edge 14 of the tape 12 after initial detection of the reverse reference burst signal 26.

It will be appreciated by persons skilled in the art that the present invention is not limited to what has been shown and described hereinabove, nor the dimensions of sizes of the physical implementation described immediately above.

## Claims

1. A method for positioning a head assembly by detecting a center of a referance burst signal on a magnetic medium, comprising the steps of:

    writing a reference burst signal utilizing said head assembly on said magnetic medium;
    positioning said head assembly to an initial position above said first reference burst signal;
    moving said head assembly in a first direction towards said reference burst signal until said reference burst signal is detected;
    upon detection, moving said head assembly in a second direction opposite said first direction to said initial position;
    moving said head assembly in a first direction until said reference burst signal is traversed; and
    determining a center of said reference burst signal by summing the step locations that are over detected signals of the reference burst and calculating the average location or center.

2. The method claimed in claim 1, wherein said magnetic medium is magnetic tape.

3. The method claimed in claim 1, wherein said head assembly is a magnetic head assembly including at least one read and one write head.

4. The method claimed in claim 1, wherein said step of writing a reference burst signal utilizing said head assembly on said magnetic medium further includes the step of:

    writing said reference burst signal in the region between beginning of tape and load point holes.

5. The method claimed in claim 1, wherein said reference burst signal is a forward reference burst signal

6. The method claimed in claim 1, wherein said reference burst signal is a reverse reference burst signal.

7. The method claimed in claim 1, wherein said step of moving said head assembly in a first direction towards said reference burst signal until said reference burst signal is detected and moving said head assembly in a first direction until said reference burst signal is traversed further comprises the step of:

utilizing a digital burst detector to determine the presence of said reference burst signal.

8. The method claimed in claim 1 wherein said head assembly is moved in predetermined steps.

9. A method for positioning a head assembly by detecting a center of a referance burst on a magnetic medium, comprising the steps of:

writing first and second reference burst signals utilizing said head assembly on said magnetic medium;

positioning said head assembly to an initial position above said first and second reference burst signals;

moving said head assembly in a first direction towards said first reference burst signal until said first reference burst signal is detected;

upon detection, moving said head assembly in a second direction opposite said first direction to said initial position;

moving said head assembly in a first direction until said first reference burst signal is traversed; and

determining a center of said first reference burst signal by summing the number of steps required for said head assembly to traverse said first reference burst signal and by calculating the average of said steps.

10. The method claimed in claim 9, further comprising the steps of:

moving said head assembly in a first direction until said second reference burst signal is traversed; and

determining a center of said second reference burst signal by summing the step locations that are over detected signals of said second reference burst and calculating the average location or center.

11. The method claimed in claim 9, wherein said magnetic medium is magnetic tape.

12. The method claimed in claim 11, wherein said magnetic tape is standard 6.35 mm width.

13. The method claimed in claim 11, wherein said magnetic tape is standard 8.00 mm width.

14. The method claimed in claim 9, wherein said head assembly is a magnetic head assembly including at least one read and one write head.

15. The method claimed in claim 9, wherein said step of writing first and second reference burst signals utilizing said head assembly on said magnetic medium further includes the step of:

writing said first and second reference burst signals in the region between beginning of tape and load point holes.

16. The method claimed in claim 15, wherein said first reference burst signal is written between centerline and top edge of said magnetic medium and said second reference burst signal is written between centerline and bottom edge of said magnetic medium.

17. The method claimed in claim 9, wherein said first reference burst signal is a forward reference burst signal and said second reference burst signal is a reverse reference burst signal.

18. The method claimed in claim 9, wherein said step of moving said head assembly in a first direction towards said first reference burst signal until said first reference burst signal is detected and moving said head assembly in a first direction until said first reference burst signal is traversed further comprises the step of:

utilizing a digital burst detector to determine the presence of said first reference burst signal.

19. The method claimed in claim 10, wherein said step of moving said head assembly in a second direction until said second reference burst signal is traversed further comprises the step of:

utilizing a digital burst detector to determine the presence of said second reference burst signal.

20. The method claimed in claim 9 wherein said head assembly is moved in predetermined steps.

START

STEP HEAD ABOVE FORWARD REFERENCE BURSTS — 1

STEP HEAD DOWN TOWARDS REFERENCE BURST — 2

DETECTION ? — 3    NO

YES

STEP HEAD ABOVE REFERENCE BURST — 4

$\sum$ STEPS = 0
SAMPLES = 0 — 5

(1)

STEP DOWN 1 STEP — 6

DETECTION ? — 7    NO

YES

$\sum$ STEPS = $\sum$ STEPS + CURRENT STEP — 8

SAMPLES = SAMPLES = 1 — 9

MAX STEPS — 10    NO    (1)

YES

BURST CENTER = $\sum$ STEPS/SAMPLES — 11

REPEAT FOR REVERSE — 12

END

FIG. 2

FIG. 1

6

European Patent Office

**EUROPEAN SEARCH REPORT**

Application Number

EP 96 30 7100

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| Y | US-A-5 353 177 (YANAGIBASHI) | 1,3,9, 11,14 | G11B5/55 G11B5/584 |
| A | * column 3, line 30 - column 10, line 7; figures * | | |
| | --- | | |
| Y | GB-A-2 282 911 (HP) | 1,3,9, 11,14 | |
| A | * page 5, line 1 - page 9, line 21; figures * | 2,4-8, 10,12 | |
| | --- | | |
| A | PATENT ABSTRACTS OF JAPAN vol. 16, no. 256 (P-1368), 10 June 1992 & JP-A-04 060913 (SANKYO), 26 February 1992, * abstract * | 1,4,9 | |
| | --- | | |
| A | EP-A-0 592 762 (TANDBERG) * page 3, column 4, line 37 - page 5, column 8, line 26; figures * | 1,9 | |
| | ----- | | TECHNICAL FIELDS SEARCHED (Int.Cl.6) |
| | | | G11B |

The present search report has been drawn up for all claims

| Place of search | Date of completion of the search | Examiner |
|---|---|---|
| THE HAGUE | 19 December 1996 | Geoghegan, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)